# EUROPEAN PATENT APPLICATION

(11) **EP 4 203 198 A1**
(43) Date of publication of application: **28.06.2023**
(21) Application number: 21217764.6
(22) Date of filing: 26.12.2021
(51) Int. Cl.: H01R 12/73, H01R 35/00

(54) **AUTOMOTIVE LUMINOUS DEVICE**

(71) Applicant: Valeo Vision, 93012 Bobigny Cedex (FR)
(72) Inventor: CANTUDO FRANCO, Miguel Angel, 23600 Martos (ES); RODRIGUEZ NAVARRO, Leandro, 23600 Martos (ES); FERNANDEZ CHAICHIO, Ricardo, 23600 Martos (ES); ILLAN CABEZA, Antonio Domingo, 23600 Martos (ES)
(74) Representative: Valeo Visibility

(57) **Abstract**

The invention provides an automotive luminous device (10) comprising a plurality of rigid plane substrates (1, 2, 3, 4, 9) and a plurality of connectors (6, 7, 8, 15). Each substrate (1, 2, 3, 4, 9) comprises at least one light source (5) and each connector is arranged to provide an electric connection between two adjacent substrates. Further, each substrate (1, 2, 3, 4, 9) is arranged so that at least two of the substrates form a relative angle between 90 and 180 degrees with each other and at least two of the substrates form a relative angle between 0 and 90 degrees with each other. The connectors (6, 7, 8, 15) provide a daisy chain for all the substrates, so that, each substrate is at least connected with one adjacent substrate and at most connected with its two adjacent substrates.

## Description

### TECHNICAL FIELD

This invention belongs to the field of the arrangements of the elements of an automotive luminous device.

### STATE OF THE ART

Automotive lighting market can be considered one of the most competitive ones and new lighting functions are constantly required.

There are some luminous designs where light needs to be emitted from different light sources in different planes. This is often used in some signalling functions, wherein a central space is surrounded by light emission, and is seen as a continuous closed line from outside. The problem is the electric interconnection of a high number of distant substrates. Several groups of harnesses are needed to provide the electric connection between different substrates.

However, these harnesses create some electromagnetic problems caused by antenna structures created by the harnesses and by the loops in the electric signals.

A new way of arranging these substrates is sought, to avoid or at least mitigate the aforementioned problems.

### DESCRIPTION OF THE INVENTION

The present invention provides an alternative solution for this problem by means of an automotive luminous device. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides an automotive luminous device comprising
a plurality of rigid plane substrates, each substrate comprising at least one light source,
a plurality of connectors, each connector being arranged to provide an electric connection between two adjacent substrates
   wherein
each substrate is arranged so that at least two of the substrates form a relative angle between 90 and 180 degrees with each other and at least two of the substrates form a relative angle between 0 and 120 degrees with each other
the connectors provide a daisy chain for all the substrates, so that, each substrate is at least connected with one adjacent substrate and at most connected with its two adjacent substrates.

This arrangement does not need any long harness which extend through the inner space of the lighting device, since the only electric connections are performed between two adjacent substrates and they do not cause any risk of entangling.

A rigid substrate should be understood in the sense of what the skilled person would construe. A skilled person knows the difference between a rigid substrate and a flexible substrate. Although every material is "flexible" in the sense that it has a stress-strain curve, a substrate which does not apparently deform by its own weight when held by one of its ends is deemed to be rigid, while a substrate which suffer a substantial deformation when held by one of its ends is considered to be flexible.

In some particular embodiments, there is at least a pair of adjacent substrates which are not connected with each other.

Since control can reach one substrate by one adjacent substrate or by the other, there are some cases where there is no need that every substrate is connected to their both adjacent substrates.

In some particular embodiments, the substrates and the connectors delimit a central space of the luminous device.

The effect of surrounding a space of the luminous device is therefore achieved by means of different substrates but without any entangling problems due to harnesses which communicate one main substrate with the rest of them.

In some particular embodiments,
the luminous device comprises at least one lighting module and the substrates and the connectors are comprised in one of the lighting modules.

The present invention may be applied either to an arrangement which is located directly in the housing of a luminous device or to an arrangement which is located inside a module which is in turn inside of a luminous device. In both cases, the problem to be solved is the same, so the present invention brings a solution to this problem in both scenarios.

In some particular embodiments, at least one of the substrates comprises a row of light sources arranged to emit light in a substrate direction.

A row of light sources is specially adapted to perform some light functions, such as daytime running lamp, direction indicator lamp, rear position lamp, etc.

In some particular embodiments, the automotive luminous device further comprises an optical element arranged to receive the light emitted by the light sources and project the light in a projection direction.

An optical element is an element that has some optical properties to receive a light beam and emit it in a certain direction and/or shape, as a person skilled in automotive lighting would construe without any additional burden. In some particular embodiments, the optical element is at least one of a light guide, a lens, a reflector or a collimator.

In some particular embodiments, the substrate direction is perpendicular to the projection direction.

The invention is particularly suitable when being used in this context, where the substrates are substantially parallel to the direction where light is projected.

In some particular embodiments,
the luminous device further comprises an outer lens
each substrate is fixed to the corresponding optical element the substrates with the optical elements are fixed to the outer lens.

With this arrangement, the final dimensional tolerance is reduced, since the mechanical tolerance when mounting the rest of the elements does not affect to the positioning between the light source and the lens.

In some particular embodiments, the connectors are suitable to be mounted and demounted manually.

Therefore, the assembly process is reversible, in the event some parts need to be replaced.

In some particular embodiments, at least one of the connectors have a first end intended to be coupled to one substrate and a second end intended to be coupled to another substrate, wherein the connectors are configured to be arranged in different angular positions, with the two ends forming different angles.

In some cases, the invention may be applied to different luminous devices, where the substrates are arranged with different angles. Since the invention requires connectors which provide an electric connection between two adjacent substrates, it is advantageous that the same connectors may be used to connect substrates which form different angles with each other.

In some particular embodiments, at least one of the connectors comprise two portions which are coupled by means of a hinge.

This is one of the possible solutions to achieve this goal. A hinge allows any angular position and is easy and cheap to manufacture.

In some particular embodiments, at least one of the connectors comprise a flexible substrate.

A flexible substrate is also a suitable option, since it has the tracks incorporated in the connector and provides a clean and safe result.

In some particular embodiments, the connections between the connector and the substrate comprise card edge connectors.

Card edge connectors are a good option since it provides the manual detachment and a reliable electric connection.

In some particular embodiments, one of the connectors or one of the substrates are connected to a main driver element configured to control the operation of the light sources.

In some particular embodiments, the light sources are solid-state light source.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

A matrix arrangement is a typical example for these light modules. The rows may be grouped in projecting distance ranges and each column of each group represent an angle interval. This angle value depends on the resolution of the matrix arrangement, which is typically comprised between 0.01º per column and 0.5º per column. As a consequence, many light sources may be managed at the same time.

In some particular embodiments, the lighting module further comprises an optical element, such as a light filter or a collimator, adapted to receive the light emitted by the solid-state light source and project it outside the lighting module.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a general perspective view of a luminous device according to the invention.
Figures 2 to 4 shows some steps of a method of manufacturing such an automotive luminous device.
Figure 5 shows a connector comprised in a particular embodiment of a luminous device according to the invention.
Figure 6 shows a headlamp according to the invention installed in an automotive vehicle.

In these figures, the following reference numbers have been used
- 1: First printed circuit board
- 2: Second printed circuit board
- 3: Third printed circuit board
- 4: Fourth printed circuit board
- 5: Light source
- 6: First connector
- 7: Second connector
- 8: Third connector
- 9: Fifth printed circuit board
- 10: Headlamp
- 11: Central space
- 12: Light module
- 13: Light guide
- 14: Outer lens
- 15: Fourth connector
- 16: Sixth printed circuit board
- 17: Fifth connector
- 18: Portion of the connector
- 19: Hinge of the connector
- d1: Substrate direction
- d2: Projection direction

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

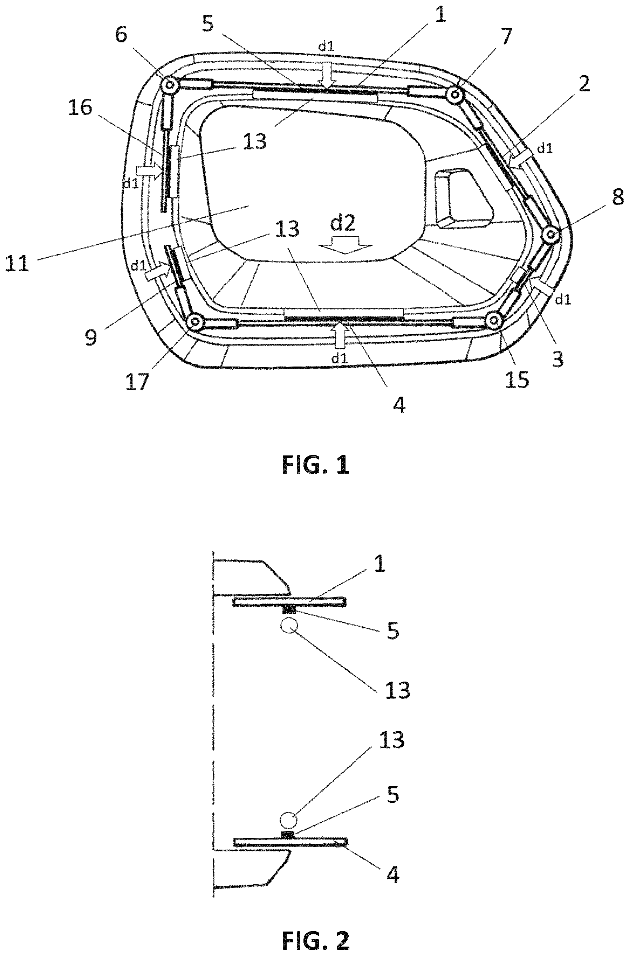

Figure 1 shows a general perspective view of one light module of a luminous device according to the invention. In this light module there is a plurality of printed circuit boards 1, 2, 3, 4, 9, 16 which are arranged as the sides of a polygon.

In the present example, the invention is implemented in a lighting module, which is an element comprised inside the luminous device. This lighting module comprises its own optical elements configured to project the light outside the lighting module. The lighting module is intended to perform a particular lighting functionality.

However, the present invention could also be directly applied in a lighting device as such.

The ends of each printed circuit board are not directly in contact with the edge of the adjacent printed circuit board, but there are a plurality of connectors 6, 7, 8, 15, 17 which provide this electric and physical connection between two adjacent printed circuit boards. The connectors 6, 7, 8, 15, 17 provide a daisy chain for all the printed circuit boards, so that, each printed circuit board is at most connected with its two adjacent substrates, except from two of the adjacent printed circuit boards, 9, 16, which are not connected by any of the connectors.

As has been previously said, the printed circuit boards 1, 2, 3, 4, 9, 16 are arranged like the sides of a polygon. This means that, e.g., two of the printed circuit boards, 1, 16, form a relative angle of 90°, while other pair of printed circuit boards, 1, 2, form 130º, and other pair, like 1, 4, nearly form 180º.

All the printed circuit boards are perpendicular to a common module plane, and are therefore arranged surrounding a central space 11 of the luminous device.

Each printed circuit board 1, 2, 3, 4, 9, 16 comprises a row of LEDs 5. In each printed circuit board, the LEDs emit light in a substrate direction, which is perpendicular to the corresponding printed circuit board. All substrate directions are therefore contained in the common module plane.

To project the light emitted by the LEDs outside the lighting module, each printed circuit board 1, 2, 3, 4, 9, 16 comprises a light guide 13 arranged to receive the light emitted by the corresponding light source 5 and project the light in a projection direction d2 which is parallel to the advance direction of the vehicle, therefore being perpendicular to the substrate directions d1.

One important advantage of this arrangement is that a driver may be located in one of the printed circuit boards and, due to the daisy chain of electric connections, the control may be extended to the LEDs of every printed circuit board, without the need of connecting each printed circuit board with the driver.

Figures 2 to 4 shows some steps of a method of manufacturing such an automotive luminous device.

Figure 2 shows the printed circuit boards (only 1 and 4 are seen) being fixed to the housing, where the corresponding light guide 13 is attached to the corresponding printed circuit board 1, 4. With this first step, the optical positioning between each LED row 5 and their light guide 13 is ensured, without being affected by the tolerances between the mechanical coupling and the optical coupling.

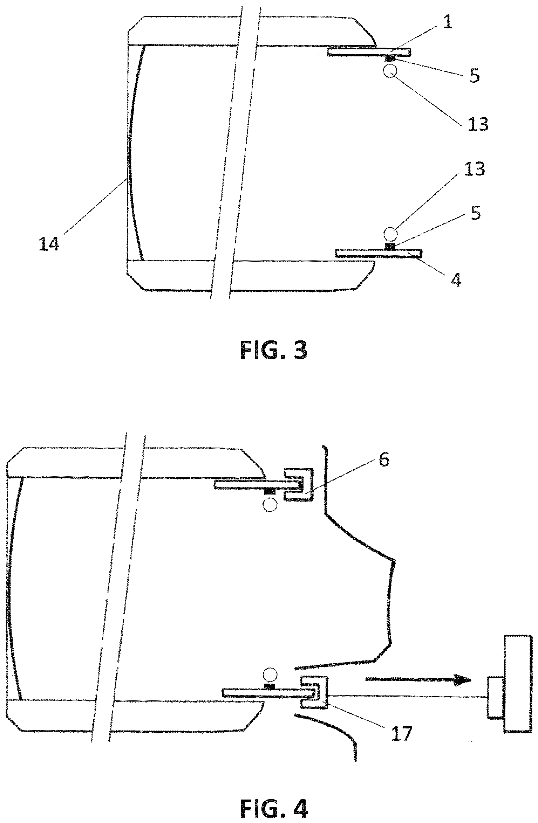

Figure 3 shows a second step, where the arrangement of the printed circuit boards with their light guides and the housing is coupled to the outer lens 14.

Figure 4 shows a final step, where the connectors 6, 17 are coupled manually to perform the daisy chain of the printed circuit boards and this arrangement is incorporated in the housing of the luminous device. In the event of an error, it is easy to replace a connector, since the connectors are configured to be coupled and decoupled manually to the edge of the printed circuit boards. A bezel and the electric connections are also added in this step.

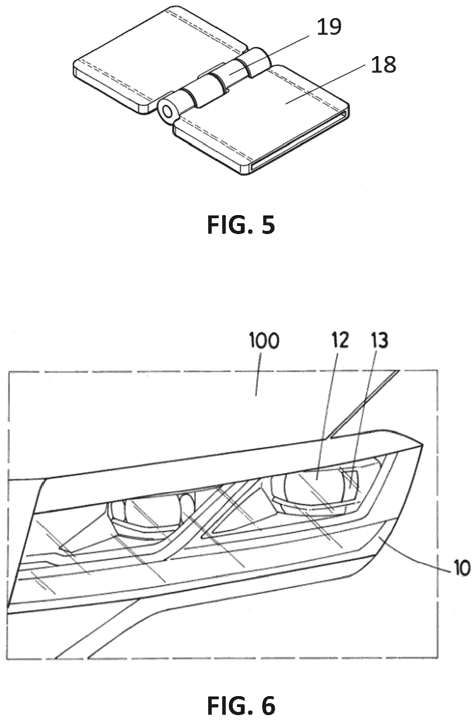

Figure 5 shows a particular embodiment of connectors.

First one, shown in Figure 5, comprises two identical plastic parts 18, which are snap fit in a hinge joint 19. Each of the plastic part comprises a card edge connector, so each part connects with one of the printed circuit boards. This type of connector adapts without any problem or stress to any angle formed by two printed circuit boards.

Figure 6 shows a headlamp 10 with such an electric arrangement installed in an automotive vehicle 100. As seen in this image, one of the modules 12 has the installation of the LEDs and light guides 13 provided by the present solution.

## Claims

1. Electronic assembly for an automotive luminous device (10), the electronic assembly comprising
a first group of light sources (1), intended to contribute to a first luminous function;
a second group of light sources (2), intended to perform a second luminous function;
a driver element (3) configured to control the operation of the first group of light sources (1) and of the second group of light sources (2); and
a mode selection circuit (5), configured to receive a mode selection control signal and to provide an output signal with a control value which depends on the mode selection control signal, wherein the mode selection control signal comprises at least one of a first control signal and a second control signal
wherein the driver element (3) comprises
a first input (31) configured to receive power supply;
a second input (32) configured to receive the output signal of the mode selection circuit; and
an output which is received by the first group of light sources (1) and by the second group of light sources (2), so that the operation of the first group of light sources and of the second group of light sources is controlled by the output of the driver element (3);
wherein the first group of light sources comprises a switch (12) controlled by the first control signal and the second group of light sources comprises a switch (22) controlled by the second control signal.

2. Electronic assembly according to claim 1, further comprising an input protection circuit (4) which
is configured to receive a first power signal (F1) and a second power signal (F2);
comprises a first protection output (45) connected to the first input (31) of the driver element (3), so that the input protection circuit (4) controls the power received by the first input (31) of the driver element as a function of the first power signal (F1) and the second power signal (F2); and
comprises a second protection output (47) which receives one of the first and second power signals and provides the mode selection signal.

3. Electronic assembly according to claim 2, wherein the input protection circuit comprises a first circuit element (41) receiving the first power signal (F1) and a second circuit element (42) receiving the second power signal (F2), wherein the output of the first circuit element and the output of the second circuit element are electrically connected to the first protection output of the input protection circuit.

4. Electronic assembly according to claim 3, wherein the input protection circuit comprises
a first diode (43) arranged at the output of the first circuit element, the first diode being directly connected to the first protection output (45);
a second diode (44) arranged at the output of the second circuit element, the second diode being directly connected to the first protection output (45); and
a third circuit element (48) arranged between one of the first and second power signals and the second protection output (47), the third circuit element (48) comprising a third diode (46).

5. Electronic assembly according to any of the preceding claims, wherein the mode selection circuit (5) comprises a first resistor group (51), a second resistor group (52) and at least one switch element (53), in such a way that the mode selection control signal is arranged to act on the switch element (53) opening or closing electric supply to the second resistor group, thus modifying the output signal value.

6. Electronic assembly according to claim 4, wherein at least one of the first (51) and the second (52) resistor groups comprises a BIN resistor and a thermal resistor.

7. Electronic assembly according to any of claims 5 or 6, wherein the mode selection control signal only comprises the second control signal and the mode selection circuit only comprises one switch element, so that the impedance of the mode selection circuit when the first control signal is activated and when the first control signal is not activated is the same.

8. Electronic assembly according to claim 7, wherein the impedance of the mode selection circuit when the second control signal is activated causes the output of the driver element to have a current value which is higher than the current value when the second control signal is not activated.

9. Electronic assembly according to any of the preceding claims, wherein the driver is configured to provide a higher current value in the output when the current value received in the second input is higher.

10. Electronic assembly according to any of claims 5 to 9, wherein the switch element (53) is a BJT or a MOSFET.

11. Electronic assembly according to any of the preceding claims, wherein first group of light sources (1) and second group of light sources (2) are arranged in parallel.

12. Electronic assembly according to any of claims 1 to 10, wherein first group of light sources (1) and second group of light sources (2) are arranged in series.

13. Electronic assembly according to any of the preceding claims, wherein the light sources are solid-state light sources.

14. Automotive luminous device (10) comprising
an electronic assembly according to any of the preceding claims, wherein the first luminous function is the rear fog lamp and the second luminous function is the reversing lamp; and
an optical element arranged to project the light emitted by the first group and the second group of light sources.
